# EUROPEAN PATENT SPECIFICATION

(11) **EP 4 345 339 B1**
(45) Date of publication and mention of the grant of the patent: **27.05.2026**
(21) Application number: 22198508.8
(22) Date of filing: 28.09.2022
(51) Int. Cl.: F16H 15/06, F16H 57/02

(54) **MECHANICAL SPEED REDUCING ASSEMBLY**
MECHANISCHE GESCHWINDIGKEITSVERRINGERUNGSANORDNUNG
ENSEMBLE RÉDUCTEUR DE VITESSE MÉCANIQUE

(43) Date of publication of application: 03.04.2024
(73) Proprietor: Innovative Mechatronic Systems B.V., 2289 BA Rijswijk (NL)
(72) Inventor: SCHORSCH, Jack Floyd, 2289 BA Rijswijk (NL); NEVEN, Job, 2289 BA Rijswijk (NL); SCHURE, Alfons, 2289 BA Rijswijk (NL)
(74) Representative: Bird & Bird LLP - Hamburg

(56) References cited:
- WO-A1-03/064891
- WO-A1-2008/116646
- JP-A- 2001 108 037
- JP-A- S60 136 658
- US-A- 3 008 354

## Description

The present invention relates to a mechanical speed reducing assembly comprising several rotationally symmetric members and to a method of assembling the mechanical speed reducing assembly. Depending on which of the member(s) receives an input torque, the suggested mechanical speed reducing assembly is suitable for altering the magnitude or direction of the output rotational speed, with respect to the input rotational speed.

WO 2018/178380 A1 discloses a compound planetary friction drive comprising a first sun wheel and planetary wheels, wherein said first sun wheel engages said planetary wheels, which planetary wheels are arranged with two outer parts having a first radius and a central part having a second radius , wherein the second radius differs from the first radius and transition regions are provided between the outer parts and the central part, and wherein an outer ring annulus and a central ring annulus are provided that are in driving engagement with the planetary wheels, wherein the outer ring annulus has two parts between which, along the length of the planetary wheels, the central ring annulus is disposed, wherein the first sun wheel is in frictional engagement with the outer parts of the planetary wheels, said outer parts of the planetary wheels are in frictional engagement with the parts of the outer ring annulus and the central ring annulus is in frictional engagement with the central part of the planetary wheels, wherein the planetary wheels are both hollow and compressible uninterruptedly along their entire length spanning the outer parts, the transition regions and the central part. Another example of a mechanical speed reducing assembly can be found on JP2001108037A.

### Problem and solution

A problem to be solved can be seen in providing an improved mechanical speed reducing assembly.

This problem is solved by the mechanical speed reducing assembly according to claim 1 and by the preferred embodiments also according to the dependent claims.

The mechanical speed reducing assembly according to the invention (first aspect) comprises a first sun wheel and a first ring wheel. The first ring wheel is arranged concentrically about the first sun wheel, such that the first sun wheel and the first ring wheel share a first symmetry axis. The assembly further comprises at least one hollow first planetary member having a first cylindrical section in frictional engagement with an outer surface of the first sun wheel and with an inner surface of the first ring wheel. The first cylindrical section serves as a running surface of the first planetary member. The first planetary member is arranged to rotate about a second axis and comprises a circumferential first groove and a circumferential second groove, which are spaced apart from each other by the first cylindrical section. The assembly further comprises at least a first alignment ring which is secured to the first sun wheel or to the first ring wheel against moving along the first symmetry axis and which protrudes into the first groove or the second groove.

The alignment ring which is secured against moving along the first symmetry axis may act against undesired motion of the first planetary member along the first or second axis, as the alignment ring also protrudes into the first groove or the second groove. This may help to reduce slipping and/or abrasion particularly caused by relative rotation of the first planetary member while the assembly is operational.

In the prior art, planetary members are often constrained by means of an axle & cam system to achieve alignment of the planetary members with the sun wheel and ring wheel. In the prior art, an alignment feature may serve to align an output member of the assembly with the rotational axis of the planetary members.

The first planetary member of the present invention may move and rotate with respect to more than one axis. The second axis of the planetary member is not fixed with respect to the first symmetry axis. An output member of the assembly can be fixed by an external bearing. The alignment ring may urge the second axis to align more with the first symmetry axis. The first alignment ring may provide a thrust bearing surface for imposing thrust on the first planetary member to urge the second axis to align more with the first symmetry axis.

Further, for any given amount of compression force applied to a contact surface, a fixed amount of traction 'thrust' is available, as determined by the coefficient of friction. If any degree of skewness occurs, the 'angle' along which that traction thrust is vectored and becomes non-parallel with the desired line of motion. Any component of the vector which is not parallel with the allowed line of action becomes lost. If the assembly is constrained against axial motion, the components must slip in the axial direction. The coefficient of friction when in slip is lower than when in traction, causing additional losses. An angle of skew may occur which causes the assembly to lose tractive effort rapidly. Changing the profile & location of the first alignment ring may act against this critical skew angle. By reducing the amount of lost thrust, torque capacity & efficiency of the assembly are increased. By reducing the amount of slippage, abrasive wear of the members of the assembly can be smaller and service life of the assembly may be extended.

### Preferred embodiments

Preferred embodiments which are explained in the following and by the dependent claims may be combined advantageously unless indicated otherwise.

The assembly may be a single stage planetary speed reducing assembly. The at least one first planetary member may be supported by a planetary carrier. The assembly can be part of a superordinate multi-stage planetary speed reducing assembly.

The first alignment ring of an embodiment comprises an alignment shoulder, which is arranged to engage with a groove side face of the first groove or of the second groove, which groove side face is generally perpendicular to the second axis. The alignment shoulder serves for inducing a stabilizing moment on to the planetary member with a direction and magnitude urging second axis to align more with the first symmetry axis. The alignment shoulder can be a mechanical flange or shoulder. The radial profile of the alignment shoulder is preferably straight, convex, concave, or of complex geometry, so as to satisfy the demand for stability implied by the location of the shoulder and the nominal dimensions of the constituent components. The alignment shoulder may extend from a side face of the first alignment ring, which side face is perpendicular to the first or second axis. The alignment shoulder

In an embodiment, the first groove and/or the second groove comprises a mating shoulder arranged to engage with the alignment shoulder. The mating shoulder may be shaped to complement the alignment shoulder. Greater or lesser angles of contact can be used, to produce greater or lesser stabilizing forces. The profile of the mating shoulder may be exactly like the profile of the alignment shoulder, or be transformed to allow for manufacturability. The radial profile of the mating shoulder is preferably straight, convex, concave, or of complex geometry, so as to satisfy the demand for stability implied by the location of the shoulder and the nominal dimensions of the constituent components.

In another embodiment the first ring wheel comprises a first recess extending circumferentially about the first symmetry axis, which first recess is arranged to accept the first alignment ring partially. Preferably the first ring wheel comprises a second recess extending circumferentially about the first symmetry axis and spaced apart from the first recess along the first symmetry axis, which second recess is arranged to accept the first alignment ring partially. The first alignment ring may help fixed in the recess against rotation relative to the first ring wheel.

The first sun wheel of a further embodiment comprises a first recess extending circumferentially about the first symmetry axis, which first recess is arranged to accept the first alignment ring partially. Preferably, the first sun wheel comprises a second recess extending circumferentially about the first symmetry axis and spaced apart from the first recess along the first symmetry axis, which second recess is arranged to accept the first alignment ring partially. The first alignment ring may help fixed in the recess against rotation relative to the first sun wheel.

An embodiment comprises a second alignment ring similar to the first alignment ring, which second alignment ring is to be arranged partially in the second recess. Preferably, the first alignment ring engages with the first groove and/or the second alignment ring engages with the second groove.

According to another embodiment, the first alignment ring, the first recess and/or the second recess comprises a curved crown. The curved crown may be limited by a portion of a circle preferably having a radius within the range of 0.025 mm to 25.4 mm, or a portion of an ellipse, or portion of a logarithmic curve. A curved crown of the first alignment ring may extend towards a circumferential surface of the first or second recess or towards a groove side face of the first groove or of the second groove. Alternatively or additionally, a curved crown of the first or second groove can protrude towards a circumferential face of the first alignment ring or from one of the groove side faces to engage with a side face of the first alignment ring. The curved crown may extend circumferentially about the first symmetry axis or about the second axis. The curved crown may help to protect a circumferential edge of the first alignment ring, the first recess and/or the second recess against abrasion.

An embodiment comprises at least a hollow second planetary member and a hollow third planetary member similar to the first planetary member. These planetary members are arranged about the first symmetry axis, each of which planetary members is in frictional engagement with the outer surface of the first sun wheel and with the inner surface of the first ring wheel. Particularly, the fourth and further planetary members similar to the first planetary member may help to reduce the torque to be transferred by each of these planetary members. This embodiment may serve as a single stage speed reducing assembly. Depending on which member(s) of the assembly receives an input torque, the suggested mechanical speed reducing assembly is suitable for increasing the input rotational speed.

In a preferred embodiment, at least the first planetary member comprises a second cylindrical section similar to the first cylindrical section, wherein the first or second groove is arranged between the second cylindrical section and the first cylindrical section. At least the first planetary member may comprise a third cylindrical section similar to the first cylindrical section, wherein the first, the second and the third cylindrical section are separated from each other by the first and second groove. The first planetary member may have been machined from a single blank. Alternatively, two of the cylindrical sections have been machined separately prior to being joined. One or more of the grooves may have been machined into the first planetary member by a lathing step.

Another embodiment further comprises a second sun wheel and a second ring wheel arranged concentrically about the second sun wheel, wherein the second sun wheel and the second ring wheel share the first symmetry axis. The second cylindrical section is in frictional engagement with an outer surface of the second sun wheel and with an inner surface of the second ring wheel. Depending on which member of the assembly receives an input torque, the suggested mechanical speed reducing assembly is suitable for increasing the input rotational speed. One of the sun wheels, preferably the second sun wheel may be fixed rotationally during operation of the embodiment.

An embodiment further comprises a bearing arranged about the first axis of symmetry, wherein the bearing engages with a sun wheel side face of the first sun wheel and with a sun wheel side face of the second sun wheel, which sun wheel side faces are perpendicular to the first symmetry axis. The bearing may help to reduce the wear of the sun wheels. The bearing may help to stabilise the first sun wheel during operation of the embodiment. The bearing can be a roller bearing or a needle bearing.

A further embodiment further comprises a third ring wheel, wherein the first ring wheel is arranged between the second ring wheel and the third ring wheel, wherein at least the first planetary member, particular a third cylindrical section, is in frictional engagement with an inner surface of the third ring wheel. The embodiment may comprise a third sun wheel, an outer surface of which is in frictional engagement at least with the first planetary member, particular with its third cylindrical section, wherein the first sun wheel is arranged between the second and third sun wheel. There may be a further bearing between the third sun wheel and the first sun wheel, allowing the first sun wheel to rotate relative to the third sun wheel. The planetary member(s) of this embodiment may comprise a third cylindrical section, the second groove, the first cylindrical section, the first groove and a second cylindrical section. One or more of the groove side faces may comprise mating shoulder(s). This embodiment may serve as a two stage planetary speed reducing assembly.

Preferably, the second and third ring wheel are coupled rotationally. The coupled ring wheels may serve as the torque output member of the embodiment.

A method of manufacturing (second aspect) a mechanical speed reducing assembly as described before preferably comprises the steps

| | |
|---|---|
| S1 | inserting one of the alignment rings into one of the recesses of the first sun wheel or of the first ring wheel, |
| S2 | inserting the alignment ring into the first or second groove at least of the first planetary member, |
| S3 | arranging the first sun wheel relative to the first ring wheel such that these are arranged concentrically and share the first symmetry axis. |

### Exemplary Embodiments

Further details and advantages of the invention become apparent to the skilled person from the exemplary embodiment described in the following.

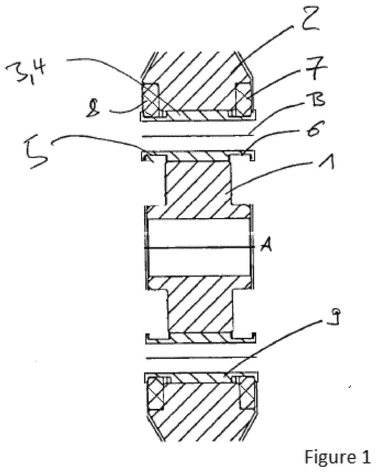

Figure 1 shows a cross section of an exemplary embodiment of a mechanical speed reducing assembly (on the left). The assembly comprises a first sun wheel 1, a first ring wheel 2 arranged concentrically about the first sun wheel, such that the first sun wheel and the first ring wheel share a first symmetry axis A, at least a hollow first planetary member 3 comprising a first cylindrical section 4, which first cylindrical section is in frictional engagement with an outer surface of the first sun wheel and with an inner surface of the first ring wheel, the first planetary member being arranged to rotate about a second axis B. The first planetary member comprises a circumferential first groove 5 and a circumferential second groove 6, which are spaced apart from each other by the first cylindrical section. The assembly further comprises at least a first alignment ring 7 which is secured to the first ring wheel against motion along the first symmetry axis and which protrudes into the first groove. While only two planetary members 3, 9 are shown, the embodiment comprises at least a third and a fourth planetary member (not shown) which are of similar structure. In addition, the embodiment comprises a second alignment ring 8 which is also secured to the first ring wheel against motion along the first symmetry axis and which protrudes into the second groove. Each of the alignment rings is held partially in a respective recess of the first ring wheel which recesses 10 are shown on the right of figure 1

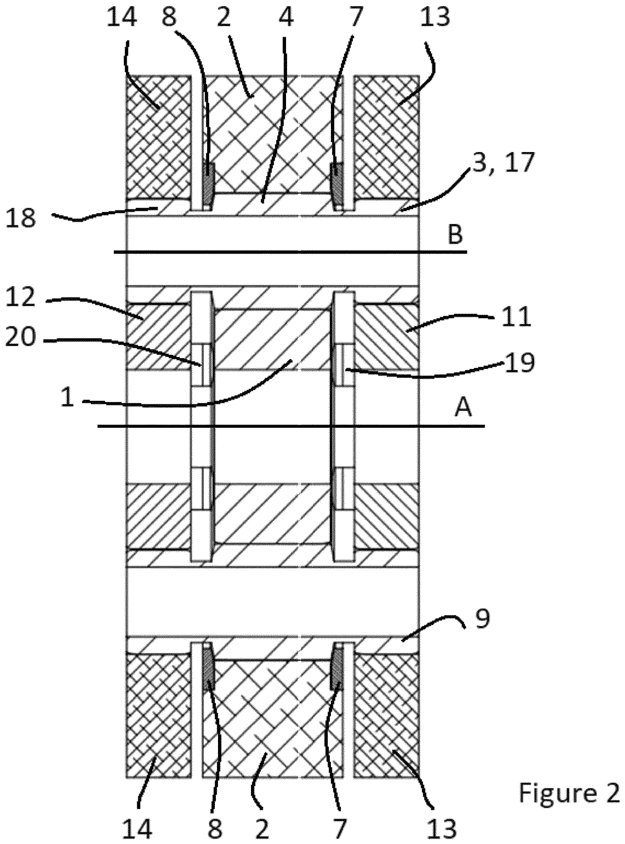

Figure 2 shows a cross section of another exemplary embodiment. Further to the members shown in figure 1, the embodiment additionally comprises a second 11 and third sun wheel 12, a second 13 and third ring wheel 14, at least a second planetary member 15 and a second alignment ring 16 similar to the first alignment ring. The first 7 and second alignment rings 8 are secured to the first ring wheel against moving along the first symmetry axis and engage with the first and second grooves of the respective planetary member. Each of the alignment rings is held partially in a respective recess of the first ring wheel 2. The planetary members each comprise a second 17 and a third cylindrical section 18. Each of the first and second grooves is arranged between two of the cylindrical sections, as is shown. Despite its grooves, each of the planetary members is of a single piece hollow structure.

The first cylindrical section 4 engages frictionally with the outer surface of the first sun wheel 1 and with the inner surface of the first ring wheel 2. The second cylindrical section 17 engages frictionally with the outer surface of the second sun wheel 11 and with the inner surface of the second ring wheel 13. The third cylindrical section 18 engages frictionally with the outer surface of the third sun wheel 12 and with the inner surface of the third ring wheel 14. While only two planetary members are shown, the embodiment comprises at least a third and a fourth planetary member. There is a first bearing 19 between the first sun wheel and the second sun wheel and a second bearing 20 between the first sun wheel and the third sun wheel.

The embodiment can be operated such the first sun wheel is driven. The first ring wheel is fixed against rotation. The second and third sun wheel are allowed to rotate freely. The second and third ring wheel are coupled rotationally and serve as a combined output member. The second and third cylindrical section of the planetary members drive the second and third ring wheels to rotate about the first symmetry axis while their first cylindrical sections roll along the inner surface of the first ring wheel. If operated in this manner, the assembly serves as a two stage speed reducing assembly.

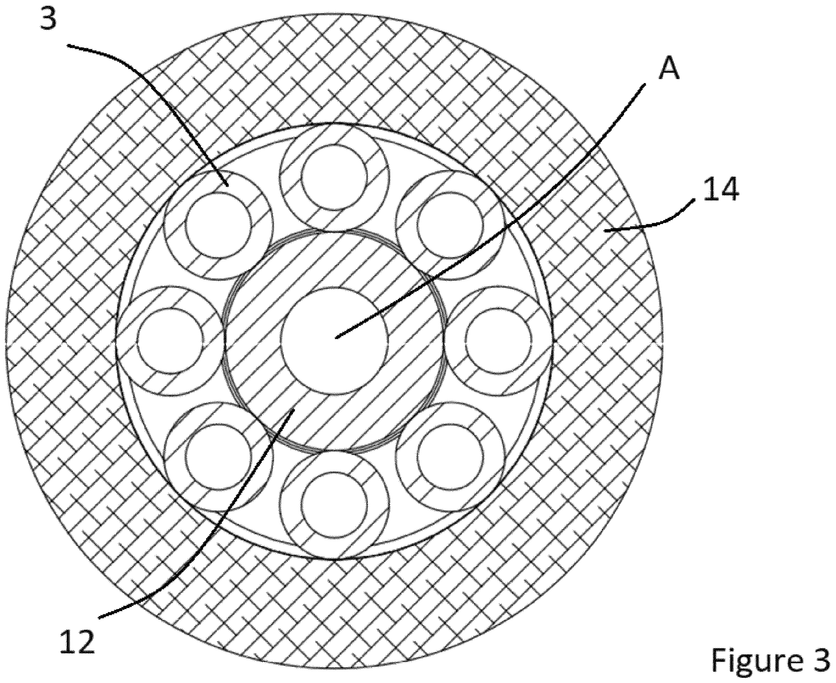

Figure 3 shows a side view of an exemplary embodiment quite similar to that of figure 2. The embodiment comprises ten hollow planetary members 3 which are arranged about the first symmetry axis A. Each of these transfers of fraction of the entire torque between each of the sun wheels and corresponding ring wheels.

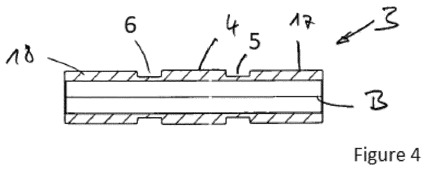

Figure 4 shows a cross section of one of the planetary members 3 of the embodiments shown by figures 2 and 3. The planetary member comprises (from left to right): the third cylindrical section 18, the second groove 6, the first cylindrical section 4, the first groove 5 and the second cylindrical section 17. The groove side faces may comprise mating shoulders (not shown).

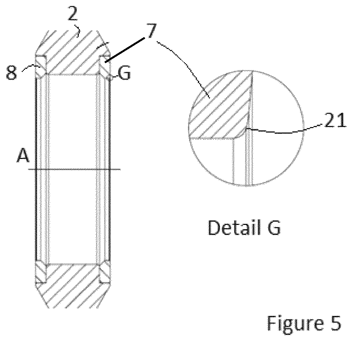

Figure 5 shows the first ring wheel 2 and two alignment rings 7, 8 of figures 1 to 4. Detail G shows that each of the alignment rings 7, 8 comprises an alignment shoulder 21. These shoulders are arranged at a side face of the respective alignment ring. The alignment shoulders have a radial profile which is preferably straight, convex, concave, or of complex geometry, so as to satisfy the demand for stability implied by the location of the shoulder and the nominal dimensions of the constituent components. The alignment shoulder serves for inducing a stabilizing moment on to the planetary member with a direction and magnitude urging second axis to align more with the first symmetry axis.

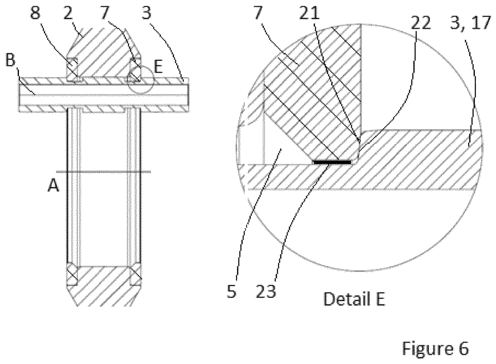

Figure 6 shows that the alignment rings 7, 8 of figures 1 to 5 engage with respective grooves 5, 6 of one of the planetary members 3. The first cylindrical section 4 of the planetary member engages frictionally with the inner/circumferential face of the first ring wheel 2 but the first sun wheel is not shown. There are mating shoulders 22 on groove side faces of the first and second groove 5, 6 to engage with the respective alignment shoulder 21 of the planetary member. The alignment shoulders and mating shoulders cooperate for inducing a stabilizing moment on to the planetary member with a direction and magnitude urging second axis to align more with the first symmetry axis. Detail E shows that a groove side face of the first groove 5 comprises a mating shoulder 22. Detail E also shows a curved crown 23 protruding from a circumferential face of the first groove 5 towards the circumferential face of first alignment ring 7.

Generally, the skilled person knows curved crowns e.g. from published application EP 3748180 A1 in the context of roller bearings, but not in the context of speed reducing assemblies.

## Claims

1. Mechanical speed reducing assembly comprising:
a first sun wheel (1),
a first ring wheel (2) arranged concentrically about the first sun wheel, such that the first sun wheel and the first ring wheel share a first symmetry axis (A),
at least a hollow first planetary member (3) comprising a first cylindrical section (4),
which first cylindrical section is in frictional engagement with an outer surface of the first sun wheel and with an inner surface of the first ring wheel, the first planetary member being arranged to rotate about a second axis (B), **characterized in that**
the first planetary member comprises a circumferential first groove and a circumferential second groove (5, 6), which are spaced apart from each other by the first cylindrical section (4),
further comprising at least a first alignment ring (7, 8) which is secured to the first sun wheel or to the first ring wheel against motion along the first symmetry axis (A) and which protrudes into the first groove or the second groove (5, 6).

2. Assembly according to claim 1, wherein the first alignment ring (7) comprises an alignment shoulder (21), which is arranged to engage with a groove side face of the first groove or of the second groove (5, 6), which groove side face is generally perpendicular to the second axis (B).

3. Assembly according to claim 2, wherein the first groove and/or the second groove (5, 6) comprises a mating shoulder (22) arranged to engage with the alignment shoulder (21).

4. Assembly according to any of the preceding claims, wherein the first ring wheel (1) comprises a first recess (10) extending circumferentially about the first symmetry axis (A), which first recess is arranged to accept the first alignment ring (7) partially.

5. Assembly according to claim 4, wherein the first ring wheel (1) comprises a second recess extending circumferentially about the first symmetry axis (A) and spaced apart from the first recess (10) along the first symmetry axis, which second recess is arranged to accept the first alignment ring (7) partially.

6. Assembly according to one of claims 1 to 3, wherein the first sun wheel (1) comprises a first recess (10) extending circumferentially about the first symmetry axis (A), which first recess is arranged to accept the first alignment ring (7) partially.

7. Assembly according to claim 6, wherein the first sun wheel (1) comprises a second recess extending circumferentially about the first symmetry axis (a) and spaced apart from the first recess (10) along the first symmetry axis, which second recess is arranged to accept the first alignment ring (7) partially.

8. Assembly according to claim 5 or 7, further comprising a second alignment ring (8) similar to the first alignment ring, which second alignment ring is to be arranged partially in the second recess.

9. Assembly according to claim 8, wherein the first alignment ring (7) engages with the first groove (5) and/or the second alignment ring (8) engages with the second groove (6).

10. Assembly according to any of the preceding claims, wherein the first alignment ring (7), the second alignment ring (8), the first recess (10) and/or the second recess comprises a curved crown (23).

11. Assembly according to any of the preceding claims, further comprising a second planetary member (9) and a third planetary member similar to the first planetary member (3), which planetary members are arranged about the first symmetry axis (A), each of which is in frictional engagement with the outer surface of the first sun wheel (1) and with the inner surface of the first ring wheel (2).

12. Assembly according to any of the preceding claims, wherein at least the first planetary member (3) comprises a second cylindrical section (17) similar to the first cylindrical section (4), wherein the first groove (5) is arranged between the second cylindrical section and the first cylindrical section.

13. Assembly according to claim
12, further comprising a second sun wheel (11) and a second ring wheel (12) arranged concentrically about the second sun wheel, wherein the second sun wheel and the second ring wheel share the first symmetry axis (A), wherein the second cylindrical section (17) is in frictional engagement with an outer surface of the second sun wheel and with an inner surface of the second ring wheel.

14. Assembly according to claim 13, further comprising a bearing (19, 20) arranged about the first axis of symmetry (A), wherein the bearing engages with a sun wheel side face of the first sun wheel (1) and a sun wheel side face of the second sun wheel (11), which sun wheel side faces are perpendicular to the first symmetry axis.

15. Assembly according to claim 13 or 14, further comprising a third ring wheel (14), wherein the first ring wheel (2) is arranged between the second ring wheel (13) and the third ring wheel, wherein at least the first planetary member (3), particular a third cylindrical section (18), is in frictional engagement with an inner surface of the third ring wheel.

16. Assembly according to claim 15, wherein the second and third ring wheel are coupled rotationally.

17. Method of manufacturing a mechanical speed reducing assembly according to any of the preceding claims, comprising
S1 inserting one of the alignment rings into one of the recesses of the first sun wheel or of the first ring wheel,
S2 inserting the alignment ring into the first or second groove at least of the first planetary member,
S3 arranging the first sun wheel relative to the first ring wheel such that these are arranged concentrically and share the first symmetry axis.

## Patentansprüche

1. Mechanische Geschwindigkeitsreduzierungsbaugruppe aufweisend:
ein erstes Sonnenrad (1),
ein erstes Hohlrad (2), welches konzentrisch derart rund um das erste Sonnenrad angeordnet ist, dass das erste Sonnenrad und das erste Hohlrad eine gemeinsame erste Symmetrieachse (A) aufweisen,
mindestens ein erstes hohles Planetenelement (3) aufweisend einen ersten zylindrischen Abschnitt (4), wobei der erste zylindrische Abschnitt mit einer Außenfläche des ersten Sonnenrads und mit einer Innenfläche des ersten Hohlrads im Reibungseingriff steht, und wobei das erste Planetenelement dafür eingerichtet ist, sich um eine zweite Achse (B) zu drehen,
**dadurch gekennzeichnet, dass** das erste Planetenelement eine erste umlaufende Nut und eine zweite umlaufende Nut (5, 6) aufweist, welche durch den ersten zylindrischen Abschnitt (4) voneinander beabstandet sind,
ferner aufweisend mindestens einen ersten Ausrichtring (7, 8), welcher am ersten Sonnenrad oder am ersten Hohlrad gegen eine Bewegung entlang der ersten Symmetrieachse (A) gesichert ist und welcher in die erste Nut oder die zweite Nut (5, 6) hineinragt.

2. Baugruppe nach Anspruch 1, wobei der erste Ausrichtring (7) eine Ausrichtungsschulter (21) aufweist, welche dafür eingerichtet ist, in eine Nutenseitenfläche der ersten Nut oder der zweiten Nut (5, 6) einzugreifen, wobei die Nutenseitenfläche in der Regel lotrecht zur zweiten Achse (B) ausgerichtet ist.

3. Baugruppe nach Anspruch 2, wobei die erste Nut und/oder die zweite Nut (5, 6) eine Gegenschulter (22) aufweist/aufweisen, welche dafür eingerichtet ist, mit der Ausrichtungsschulter (21) in Eingriff zu kommen.

4. Baugruppe nach einem der vorstehenden Ansprüche, wobei das erste Hohlrad (1) eine erste Vertiefung (10) aufweist, welche sich umlaufend um die erste Symmetrieachse (A) erstreckt, wobei die erste Vertiefung dafür eingerichtet ist, den ersten Ausrichtring (7) teilweise aufzunehmen.

5. Baugruppe nach Anspruch 4, wobei das erste Hohlrad (1) eine zweite Vertiefung aufweist, welche sich umlaufend um die erste Symmetrieachse (A) erstreckt und entlang der ersten Symmetrieachse von der ersten Vertiefung (10) beabstandet ist, wobei die zweite Vertiefung dafür eingerichtet ist, den ersten Ausrichtring (7) teilweise aufzunehmen.

6. Baugruppe nach einem der Ansprüche 1 bis 3, wobei das erste Sonnenrad (1) eine erste Vertiefung (10) aufweist, welche sich umlaufend um die erste Symmetrieachse (A) erstreckt, wobei die erste Vertiefung dafür eingerichtet ist, den ersten Ausrichtring (7) teilweise aufzunehmen.

7. Baugruppe nach Anspruch 6, wobei das erste Sonnenrad (1) eine zweite Vertiefung aufweist, welche sich umlaufend um die erste Symmetrieachse (A) erstreckt und entlang der ersten Symmetrieachse von der ersten Vertiefung (10) beabstandet ist, wobei die zweite Vertiefung dafür eingerichtet ist, den ersten Ausrichtring (7) teilweise aufzunehmen.

8. Baugruppe nach Anspruch 5 oder 7, ferner aufweisend einen zweiten Ausrichtring (8) ähnlich dem ersten Ausrichtring, wobei der zweite Ausrichtring teilweise in der zweiten Vertiefung angeordnet ist.

9. Baugruppe nach Anspruch 8, wobei der erste Ausrichtring (7) mit der ersten Nut (5) im Eingriff steht und/oder der zweite Ausrichtring (8) mit der zweiten Nut (6) im Eingriff steht.

10. Baugruppe nach einem der vorstehenden Ansprüche, wobei der erste Ausrichtring (7), der zweite Ausrichtring (8), die erste Vertiefung (10) und/oder die zweite Vertiefung eine gerundete Krone (23) aufweisen.

11. Baugruppe nach einem der vorstehenden Ansprüche, ferner aufweisend ein zweites Planetenelement (9) und ein drittes Planetenelement ähnlich dem ersten Planetenelement (3), wobei die Planetenelemente rund um die erste Symmetrieachse (A) angeordnet sind und jeweils im Reibungseingriff mit der Außenfläche des ersten Sonnenrads (1) und mit der Innenfläche des ersten Hohlrads (2) stehen.

12. Baugruppe nach einem der vorstehenden Ansprüche, wobei mindestens das erste Planetenelement (3) einen zweiten zylindrischen Abschnitt (17) ähnlich dem ersten zylindrischen Abschnitt (4) aufweist, wobei die erste Nut (5) zwischen dem zweiten zylindrischen Abschnitt und dem ersten zylindrischen Abschnitt angeordnet ist.

13. Baugruppe nach Anspruch 12, ferner aufweisend ein zweites Sonnenrad (11) und ein zweites Hohlrad (12), welches konzentrisch rund um das zweite Sonnenrad angeordnet ist, wobei das zweite Sonnenrad und das zweite Hohlrad beide die erste Symmetrieachse (A) aufweisen, wobei der zweite zylindrische Abschnitt (17) mit einer Außenfläche des zweiten Sonnenrads und mit einer Innenfläche des zweiten Hohlrads im Reibungseingriff steht.

14. Baugruppe nach Anspruch 13, ferner aufweisend ein Lager (19, 20), welches rund um die erste Symmetrieachse (A) angeordnet ist, wobei das Lager mit einer Sonnenradseitenfläche des ersten Sonnenrads (1) und einer Sonnenradseitenfläche des zweiten Sonnenrads (11) im Eingriff steht, wobei die Sonnenradseitenflächen lotrecht zur ersten Symmetrieachse angeordnet sind.

15. Baugruppe nach Anspruch 13 oder 14, ferner aufweisend ein drittes Hohlrad (14), wobei das erste Hohlrad (2) zwischen dem zweiten Hohlrad (13) und dem dritten Hohlrad angeordnet ist, wobei mindestens das erste Planetenelement (3), insbesondere ein dritter zylindrischer Abschnitt (18), im Reibungseingriff mit einer Innenfläche des dritten Hohlrads steht.

16. Baugruppe nach Anspruch 15, wobei das zweite und das dritte Hohlrad rotatorisch miteinander gekoppelt sind.

17. Verfahren zum Herstellen einer mechanischen Geschwindigkeitsreduzierungsbaugruppe nach einem der vorstehenden Ansprüche, umfassend
| | |
|---|---|
| S1 | Einsetzen eines der Ausrichtringe in eine der Vertiefungen des ersten Sonnenrads oder des ersten Hohlrads, |
| S2 | Einführen des Ausrichtrings in die erste oder die zweite Vertiefung mindestens des ersten Planetenelements, |
| S3 | Anordnen des ersten Sonnenrads relativ zum ersten Hohlrad derart, dass die beiden Räder konzentrisch angeordnet sind und beide die erste Symmetrieachse aufweisen. |

## Revendications

1. Ensemble réducteur de vitesse mécanique comprenant :
un premier pignon solaire (1),
une première couronne dentée (2) disposée concentriquement autour du premier pignon solaire, de sorte que la premier pignon solaire et la première couronne dentée partagent un premier axe de symétrie (A),
au moins un premier élément planétaire creux (3) comprenant une première section cylindrique (4), laquelle première section cylindrique est en contact par friction avec une surface extérieure du premier pignon solaire et avec une surface intérieure de la première couronne dentée, le premier élément planétaire étant disposé pour tourner autour d'un deuxième axe (B), **caractérisé en ce que**
le premier élément planétaire comprend une première rainure circonférentielle et une deuxième rainure circonférentielle (5, 6), qui sont espacées l'une de l'autre par la première section cylindrique (4),
comprenant en outre au moins une première bague d'alignement (7, 8) qui est fixée au premier pignon solaire ou à la première couronne dentée pour empêcher tout mouvement le long du premier axe de symétrie (A) et qui dépasse en saillie dans la première rainure ou la deuxième rainure (5, 6).

2. Ensemble selon la revendication 1, dans lequel la première bague d'alignement (7) comprend un épaulement d'alignement (21), qui est agencé pour venir en prise avec une face latérale de rainure de la première rainure ou de la deuxième rainure (5, 6), laquelle face latérale de rainure est généralement perpendiculaire au deuxième axe (B).

3. Ensemble selon la revendication 2, dans lequel la première rainure et/ou la deuxième rainure (5, 6) comprend un épaulement d'accouplement (22) agencé pour venir en prise avec l'épaulement d'alignement (21).

4. Ensemble selon une quelconque des revendications précédentes, dans lequel la première couronne dentée (1) comprend un premier évidement (10) s'étendant circonférentiellement autour du premier axe de symétrie (A), lequel premier évidement est agencé pour recevoir partiellement la première bague d'alignement (7).

5. Ensemble selon la revendication 4, dans lequel la première couronne dentée (1) comprend un deuxième évidement s'étendant circonférentiellement autour du premier axe de symétrie (A) et espacé du premier évidement (10) le long du premier axe de symétrie, lequel deuxième évidement est agencé pour recevoir partiellement la première bague d'alignement (7).

6. Ensemble selon une des revendications 1 à 3, dans lequel le premier pignon solaire (1) comprend un premier évidement (10) s'étendant circonférentiellement autour du premier axe de symétrie (A), lequel premier évidement est agencé pour recevoir partiellement la première bague d'alignement (7).

7. Ensemble selon la revendication 6, dans lequel la premier pignon solaire (1) comprend un deuxième évidement s'étendant circonférentiellement autour du premier axe de symétrie (A) et espacé du premier évidement (10) le long du premier axe de symétrie, lequel deuxième évidement est agencé pour recevoir partiellement la première bague d'alignement (7).

8. Ensemble selon les revendications 5 ou 7, comprenant en outre une deuxième bague d'alignement (8) similaire à la première bague d'alignement, laquelle deuxième bague d'alignement est partiellement renfermée dans le deuxième évidement.

9. Ensemble selon la revendication 8, dans lequel la première bague d'alignement (7) vient en prise avec la première rainure (5) et/ou la deuxième bague d'alignement (8) vient en prise avec la deuxième rainure (6).

10. Ensemble selon une quelconque des revendications précédentes, dans lequel la première bague d'alignement (7), la deuxième bague d'alignement (8), le premier évidement (10) et/ou le deuxième évidement comportent une couronne incurvée (23).

11. Ensemble selon une quelconque des revendications précédentes, comprenant en outre un deuxième élément planétaire (9) et un troisième élément planétaire similaire au premier élément planétaire (3), lesquels éléments planétaires sont disposés autour du premier axe de symétrie (A), chacun étant en contact par friction avec la surface extérieure du premier pignon solaire (1) et avec la surface intérieure de la première couronne dentée (2).

12. Ensemble selon une quelconque des revendications précédentes, dans lequel au moins le premier élément planétaire (3) comprend une deuxième section cylindrique (17) similaire à la première section cylindrique (4), dans lequel la première rainure (5) est disposée entre la deuxième section cylindrique et la première section cylindrique.

13. Ensemble selon la revendication 12, comprenant en outre un deuxième pignon solaire (11) et une deuxième couronne dentée (12) disposées concentriquement autour du deuxième pignon solaire, dans lequel le deuxième pignon solaire et la deuxième couronne dentée partagent le premier axe de symétrie (A), dans lequel la deuxième section cylindrique (17) est en contact par friction avec une surface extérieure du deuxième pignon solaire et avec une surface intérieure de la deuxième couronne dentée.

14. Ensemble selon la revendication 13, comprenant en outre un palier (19, 20) disposé autour du premier axe de symétrie (A), dans lequel le palier vient en prise avec une face latérale de pignon solaire du premier pignon solaire (1) et une face latérale de pignon solaire du deuxième pignon solaire (11), lesquelles faces latérales de pignon solaire sont perpendiculaires au premier axe de symétrie.

15. Ensemble selon la revendication 13 ou 14, comprenant en outre une troisième couronne dentée (14), dans lequel la première couronne dentée (2) est disposée entre la deuxième couronne dentée (13) et la troisième couronne dentée, dans lequel au moins le premier élément planétaire (3), et notamment une troisième section cylindrique (18), est en contact par friction avec une surface intérieure de la troisième couronne dentée.

16. Ensemble selon la revendication 15, dans lequel les deuxième et troisième couronnes dentées sont couplées en rotation.

17. Procédé de fabrication d'un réducteur de vitesse mécanique selon une quelconque des revendications précédentes, comprenant :
| | |
|---|---|
| S1 | l'insertion d'une des bagues d'alignement dans un des évidements du premier pignon solaire ou de la première couronne dentée, |
| S2 | l'insertion de la bague d'alignement dans la première rainure ou la deuxième rainure d'au moins le premier élément planétaire, |
| S3 | la disposition du premier pignon solaire par rapport à la première couronne dentée de sorte qu'elles soient disposées concentriquement et partagent le premier axe de symétrie. |
